# DEMANDE DE BREVET EUROPEEN

(11) **EP 0 867 316 A1**
(43) Date de publication de la demande: **30.09.1998**
(21) Numéro de dépôt: 98400653.6
(22) Date de dépôt: 20.03.1998
(51) Int. Cl.: B60G 15/06, B60G 13/00, F16F 9/54

(54) **Dispositif de fixation de l'extrémité supérieure d'une jambe de suspension sur la caisse d'un véhicule**

(30) Priorité: 28.03.1997 FR 9703827
(71) Demandeur: RENAULT, 92109 Boulogne-Billancourt (FR)
(72) Inventeur: Cabrelli, Pierre, 91460 Marcoussis (FR); Veneau, Jean, 92500 Rueil Malmaison (FR)

(57) **Abrégé**

Dispositif de fixation de l'extrémité supérieure d'une jambe de suspension ou d'un amortisseur sur la caisse d'un véhicule automobile, du type dans lequel une tige d'extrémité d'un amortisseur traverse une ouverture prévue dans un élément de structure (1) solidaire de la caisse du véhicule, caractérisé en ce que la tige d'amortisseur est solidarisée à l'élément de la structure de la caisse par une articulation à rotule élastique (43,44,45), reliée élastiquement à l'élément de structure de la caisse par des éléments élastiques annulaires (46,52), les éléments élastiques étant maintenus serrés contre la caisse par l'intermédiaire d'un moyen de verrouillage (5,7) coopérant avec l'articulation rotulaire.

## Description

La présente invention concerne un dispositif de fixation de l'extrémité supérieure d'une jambe de suspension ou d'un amortisseur sur la caisse d'un véhicule.

La partie supérieure d'une jambe de suspension ou d'un amortisseur est généralement reliée à la caisse par l'intermédiaire d'un élément élastique qui doit pouvoir encaisser les efforts verticaux transmis par la roue et les efforts horizontaux de guidage des roues tout en étant suffisamment souple pour assurer un bon filtrage des vibrations et pour permettre les mouvements angulaires que les débattements verticaux de la roue impriment à la tige par rapport à la caisse.

L'élément élastique est solidaire d'une coupelle liée, par exemple, à un support solidaire de la caisse du véhicule par deux ou trois systèmes vis-écrou.

L'opération de montage de l'amortisseur par vissage de ses éléments constitutifs, sur le support solidaire de la caisse, est particulièrement longue et fastidieuse, notamment en raison de l'encombrement du compartiment moteur des véhicules actuels qui rend difficile l'accès aux vis de fixation du support sur la caisse.

La présente invention se propose de résoudre ces problèmes en proposant un dispositif de fixation, de conception simple, de fixation de l'extrémité supérieure d'une jambe de suspension ou d'un amortisseur sur la caisse d'un véhicule automobile et permettant en outre d'en réduire considérablement le temps de montage.

A cet effet, l'invention a pour objet un dispositif de fixation de l'extrémité supérieure d'une jambe de suspension ou d'un amortisseur sur la caisse d'un véhicule automobile, du type dans lequel une tige d'extrémité d'un amortisseur traverse une ouverture prévue dans un élément de structure solidaire de la caisse du véhicule.

Ce dispositif est caractérisé en ce que la tige d'amortisseur est solidarisée à l'élément de la structure de la caisse par une articulation à rotule élastique, reliée élastiquement à l'élément de structure de la caisse par des éléments élastiques annulaires, les éléments élastiques étant maintenus serrés contre la caisse par l'intermédiaire d'un moyen de verrouillage coopérant avec l'articulation rotulaire.

Selon une caractéristique de la présente invention, l'articulation rotulaire est constituée de :
- une tête solidaire de l'extrémité de la tige d'amortisseur, réalisée sous la forme d'un manchon,
- une enveloppe réalisée sous la forme d'un tube coaxial au manchon auquel elle est solidarisée par une couche d'un matériau élastique.

Selon une caractéristique de la présente invention, le moyen de verrouillage est constitué d'un écrou vissé sur l'extrémité libre de l'enveloppe de l'articulation rotulaire.

Selon une caractéristique de la présente invention, les éléments de liaison élastiques de l'articulation avec la caisse sont constitués d'un premier et d'un deuxième anneaux, montés respectivement de part et d'autre de l'ouverture de passage de l'extrémité de l'amortisseur dans l'élément de structure de la caisse.

Selon une caractéristique de la présente invention, l'ouverture de passage de l'extrémité supérieure de la tige de l'amortisseur est percée au centre d'un évidement concave réalisé sur l'élément de structure de la caisse, le premier élément annulaire élastique venant se loger en partie dans ledit évidement en position de montage de l'amortisseur sur la caisse.

On comprendra mieux les buts, aspects et caractéristiques de la présente invention d'après la description donnée ci-après d'un mode de réalisation de l'invention, présenté à titre d'exemple non limitatif, en se référant aux dessins annexés, dans lesquels :

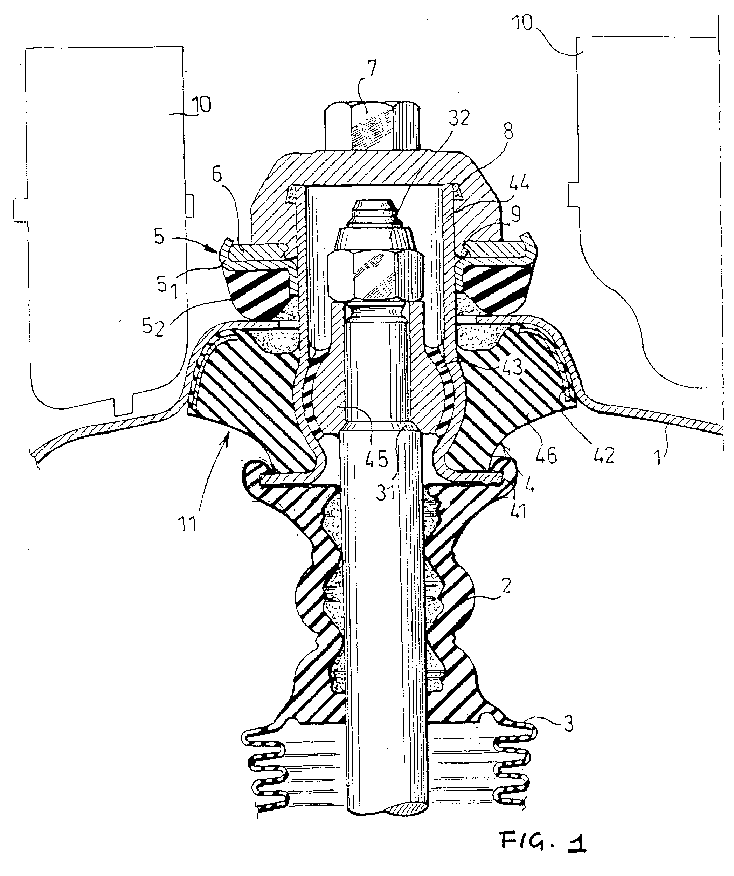

- la figure 1 est une vue en coupe transversale d'un premier mode de réalisation du dispositif de fixation selon la présente invention.
- la figure 2 est une vue en coupe transversale d'un second mode de réalisation du dispositif de fixation selon la présente invention.

En se reportant à la figure unique, un dispositif de fixation conforme à la présente invention relie, à un élément de structure 1 de la caisse du véhicule, l'extrémité supérieure d'un amortisseur de type télescopique dont seule la tige 3 est représentée.

L'élément de structure de la caisse 1 comporte un bossage formé par emboutissage et qui est percé d'une ouverture centrale.

L'amortisseur est relié par son extrémité inférieure à une fusée porte-roue.

La référence 10 désigne des boîtiers de différents dispositifs montés à l'intérieur du compartiment moteur du véhicule au voisinage de l'ouverture centrale du bossage.

Le dispositif de fixation selon l'invention comporte trois éléments constitutifs qui sont une articulation à rotule élastique, un élément élastique annulaire reliant élastiquement l'articulation à la face convexe du bossage de l'élément de structure de la caisse et un moyen de serrage de l'élément élastique annulaire de liaison sur ledit élément de structure de la caisse.

L'articulation à rotule élastique comprend une tête constituée par un renflement sphérique réalisé sur la surface extérieure d'un manchon tubulaire 45.

Le manchon 45 est monté à l'intérieur d'un tube coaxial 44, formant enveloppe de la tête de l'articulation rotulaire, auquel il est solidarisé par un matériau élastique 43, par exemple une couche de caoutchouc appliquée par vulcanisation entre la partie sphérique de la surface extérieure du manchon 45 et la surface intérieure du tube 44 disposée en vis-à-vis.

Le tube 44 comporte un renflement sphérique, obtenu par exemple par repoussage, disposé en vis-à-vis avec le renflement du manchon 45, la masse de matériau élastique 43 étant disposée entre les renflements respectifs du manchon 45 et du tube 44. L'effet de rotule est obtenu par les renflements précités et la partie élastomère. Cette articulation rotulaire permet le débattement angulaire de la tige par rapport à la caisse lors du braquage ou du débattement vertical de la roue.

L'extrémité inférieure du tube 44 comporte un rétrécissement radial à la base duquel s'étend une collerette radiale 41. Un élément élastique sensiblement annulaire 46, pouvant comporter une armature, est solidarisé à la surface extérieure du tube 44.

L'extrémité axiale supérieure de l'élément élastique annulaire 46 vient se loger dans la partie concave de l'élément de structure de la caisse.

Pour la fixation de l'amortisseur sur l'élément d'appui 4, la tige 3 comporte une extrémité supérieure de diamètre réduit, en partie filetée, délimitée par un épaulement 31. Le diamètre intérieur du manchon 45 reçoit l'extrémité de diamètre réduit de la tige 3.

Le diamètre intérieur du manchon 45 débouche au niveau de sa partie inférieure sur une fraisure qui prend appui sur l'épaulement 31.

Le manchon 45 est fixé à l'extrémité de la tige 3 par l'épaulement réalisé sur cette extrémité et par un écrou 32 vissé sur la partie filetée de l'extrémité de diamètre réduit de la tige 3.

Une butée 2 élastique de talonnage, souple et sensiblement annulaire, s'étend axialement le long de la tige 3 sur une partie de cette dernière.

L'extrémité supérieure de la butée 2 vient en appui contre l'extrémité inférieure du tube 44 et est rabattue sur le bord de la collerette radiale 41 du tube.

Cette butée 2 a pour fonction d'une part de modifier la loi d'élasticité du ressort hélicoïdal qui entoure l'amortisseur, pour en limiter la course en compression et réalise, d'autre part, l'étanchéité de l'articulation à rotule (41,43,45).

L'écrou 7 comporte à sa partie supérieure une tête polygonale en vue de l'entraînement de l'écrou à l'aide d'une clé. La tête est fixée sur un fût sensiblement cylindrique comportant un trou borgne dont une partie de la surface cylindrique interne à partir de l'ouverture du trou est munie d'un taraudage.

Le fût 3 comporte une gorge radiale interne qui reçoit un joint d'étanchéité 8 venant coopérer avec la surface extérieure du tube 44 lorsque l'écrou 7 est vissé sur le tube 44.

L'extrémité axiale inférieure de l'écrou 7 comporte un épaulément plan servant d'appui à une rondelle 6 dont le bord périphérique intérieur coopère avec une gorge réalisée radialement à la base de l'épaulement plan puis s'étend axialement à partir de l'épaulement plan.

Autour du tube 44 est monté, et ce, sur l'autre face de l'élément de structure un tampon 52 de forme sensiblement annulaire réalisé en un matériau élastique serré axialement contre la face convexe de l'élément de caisse 1 par l'intermédiaire d'une coupelle 51 interposée entre le tampon et l'écrou.

La coupelle 51 et le tampon 52 peuvent être solidarisés entre eux, par exemple par adhérisation.

La coupelle 51 est montée glissante autour du tube 44 ; la coupelle comporte des épaulements circulaires qui saillent respectivement de part et d'autre de la partie centrale plane de la coupelle 51.

L'un des épaulements circulaires constitue avec la partie centrale de la coupelle un logement pour la rondelle d'appui de façon à centrer ladite rondelle sur la face supérieure de la coupelle 51.

L'autre épaulement s'étend axialement vers le bas le long du tube de façon à centrer la coupelle 51 autour dudit tube 44.

Une rondelle d'appui 6 est interposée entre l'écrou 7 et la coupelle 51.

Les éléments élastiques 46 et 52 assurent, d'une part, la filtration des vibrations transmises à la caisse par la roue et doivent, d'autre part, encaisser les efforts verticaux transmis par la roue et les efforts horizontaux de guidage des roues.

Le montage du dispositif décrit plus haut sur la caisse 1 du véhicule est particulièrement simple puisqu'il suffit d'engager l'extrémité supérieure de la tige 3 de l'amortisseur dans le perçage du corps 45, de visser l'écrou 32 sur l'extrémité filetée de la tige 3, d'engager l'ensemble ainsi obtenu dans l'ouverture pratiquée dans la caisse du véhicule ; cette première partie 4 du dispositif de fixation étant montée, on engage la bague annulaire élastique de la deuxième partie 5 du dispositif de fixation autour du tube 44 jusqu'à ce qu'elle vienne en butée contre l'élément de caisse 1, l'écrou 7 est ensuite vissé sur la partie filetée externe du tube pour précontraindre les éléments élastiques 52 et 46 et solidariser la première partie 4 et la deuxième partie 5 du dispositif de fixation sur la caisse 1 du véhicule. Une fois les filets de l'écrou et du tube engagés, il suffit de visser l'écrou 7 pour provoquer le serrage adéquat de l'extrémité supérieure de l'amortisseur sur la caisse.

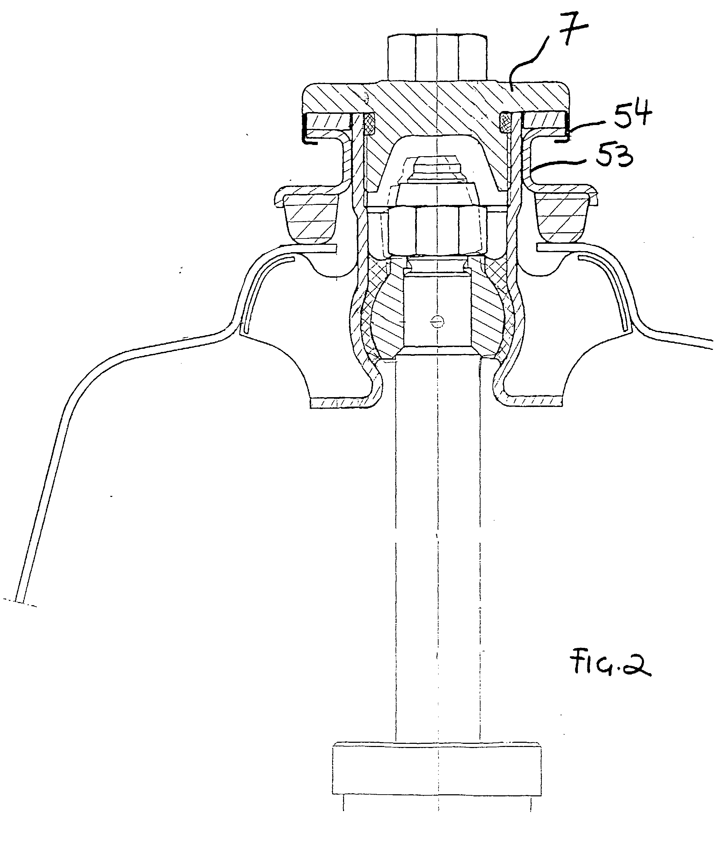

En référence à la figure 2, le second mode de réalisation diffère du premier en ce que l'extrémité supérieure du tube 44 est fileté intérieurement, l'écrou 7 venant se visser à l'intérieur du tube 44. L'écrou 7 est constitué, en un seul tenant, d'une partie cylindrique filetée extérieurement, et surmonté par un couvercle saillant radialement à partir de la partie supérieure du cylindre.

Le tampon 52 est adhérisé à l'extrémité inférieure d'un élément annulaire 53 présentant une section transversale en forme de U.

La branche centrale s'étend axialement le long du tube 44 et les deux autres branches du U s'étendent radialement à l'opposé de la surface extérieure du tube 44.

Un élément annulaire 54 ou des languettes, s'étendent axialément à partir du bord inférieur du couvercle de l'écrou. La partie inférieure de cet élément annulaire s'étend en outre radialement en direction du tube 44, cette partie inférieure radiale de l'élément annulaire présente en outre une élasticité suffisante pour permettre l'introduction de la rondelle 6 et de la branche latérale supérieure du U dans l'espace compris entre la surface intérieure de la partie radiale de l'élément 54 et le couvercle de l'écrou.

L'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif de fixation de l'extrémité supérieure d'une jambe de suspension ou d'un amortisseur sur la caisse d'un véhicule automobile, du type dans lequel une tige d'extrémité d'un amortisseur traverse une ouverture prévue dans un élément de structure (1) solidaire de la caisse du véhicule, caractérisé en ce que la tige d'amortisseur est solidarisée à l'élément de la structure de la caisse par une articulation à rotule élastique (43,44,45), reliée élastiquement à l'élément de structure de la caisse par des éléments élastiques annulaires (46,52), les éléments élastiques étant maintenus serrés contre la caisse par l'intermédiaire d'un moyen de verrouillage (5,7) coopérant avec l'articulation rotulaire.

2. Dispositif de fixation selon la revendication 1, caractérisé en ce que l'articulation rotulaire est constitué de :
- une tête (45) solidaire de l'extrémité de la tige d'amortisseur, réalisée sous la forme d'un manchon,
- une enveloppe (44) réalisée sous la forme d'un tube coaxial au manchon auquel elle est solidarisée par une couche d'un matériau élastique (43).

3. Dispositif de fixation selon les revendications 1 ou 2, caractérisé en ce que le moyen de verrouillage est constitué d'un écrou (7) vissé sur l'extrémité libre de l'enveloppe (44) de l'articulation rotulaire.

4. Dispositif de fixation selon l'une quelconque des revendications précédentes, caractérisé en ce que les éléments de liaison élastiques de l'articulation avec la caisse sont constitués d'un premier (46) et d'un deuxième (52) anneaux, montés respectivement de part et d'autre de l'ouverture de passage de l'extrémité de l'amortisseur dans l'élément de structure de la caisse.

5. Dispositif de fixation selon l'une quelconque des revendications précédentes, caractérisé en ce que l'ouverture de passage de l'extrémité supérieure de la tige de l'amortisseur est percée au centre d'un évidement concave réalisée sur l'élément de structure (1) de la caisse, le premier élément annulaire élastique venant se loger en partie dans ledit évidement en position de montage de l'amortisseur sur la caisse.
